# EUROPEAN PATENT APPLICATION

(11) **EP 4 404 429 A2**
(43) Date of publication of application: **24.07.2024**
(21) Application number: 23219473.8
(22) Date of filing: 21.12.2023
(51) Int. Cl.: H02J 50/20, H02J 50/40, H02J 50/80, H02J 50/90

(54) **METHOD AND APPARATUS FOR PROVIDING HIGH POWER IN A WIRELESS POWER SYSTEM**

(30) Priority: 23.12.2022 US 202263435046 P
(71) Applicant: Ossia Inc., Redmond, WA 98052 (US)
(72) Inventor: ZEINE, Hatem, Redmond, WA, 98052 (US)
(74) Representative: AWA Sweden AB

(57) **Abstract**

A method is implemented by a wireless power system. The wireless power system includes a wireless power transmitter and a wireless power receiver. The method includes receiving, by the wireless power transmitter of the wireless power system, beacon signals transmitted from the wireless power receiver of the wireless power system. The method includes adding, by the wireless power transmitter, phases for each port of the wireless power receiver based upon the beacon signals. The method includes generating, by the wireless power transmitter, a high power signal based on adding of the phases. The method includes transmitting, by the wireless power transmitter, the high power signal to the wireless power receiver.

## Description

### CROSS-REFERENCE TO RELATED APPLICATIONS

This application claims priority to provisional U.S. Application Number 63/435,046, filed December 23, 2022, the contents of which are hereby incorporated by reference in their entirety.

### FIELD OF INVENTION

The present invention relates generally to power transmission systems and battery chargers, and particularly to a method and system for wireless power transmission by microwave transmission to power a device requiring electrical power.

### BACKGROUND

A potential source of electromagnetic energy is microwave energy. However, there are several problems associated with the efficient delivery of power by microwave transmission that have precluded the use of dedicated terrestrial microwave power transmitters for the purpose.

For instance, conventional wireless power utilizes a beacon signal by a power receiver to identify a power receiver (e.g., a device to be charged, a beacon device, or powered device). Further, the beacon can be used to capture an interference pattern across an array of the power transmitter. In this regard, the power transmitter can determine a complex conjugate of an interference pattern phase set on the array to emits one or more signals that travel back to the power receiver. The one or more signals can be considered a "focused" power that is powerful enough to power the power receiver.

Yet, for high power, high distance applications, a size of the power receiver would have to be significant to enable enough aperture to capture the focused power at the high distances. Additionally, a beam of the focused power can grow significantly over the high distance.

Thus, a wireless power transmission system solving the aforementioned problems is desired.

### SUMMARY

According to one or more embodiments, a method can be implemented by a wireless power system. The wireless power system includes a wireless power transmitter and a wireless power receiver. The method includes receiving, by the wireless power transmitter of the wireless power system, one or more beacon signals transmitted from the wireless power receiver of the wireless power system. The method includes adding, by the wireless power transmitter, phases for each port of the wireless power receiver based upon the one or more beacon signals. The method includes generating, by the wireless power transmitter, a high power signal based on adding of the phases. The method includes transmitting, by the wireless power transmitter, the high power signal to the wireless power receiver.

According to one or more embodiments, a method can be implemented by a wireless power system. The wireless power system includes a wireless power transmitter and a wireless power receiver. The method includes receiving, by the wireless power transmitter of the wireless power system, one or more beacon signals transmitted from the wireless power receiver of the wireless power system. The method includes determining, by the wireless power transmitter, a delta of the one or more beacons.. The method includes determining, by the wireless power transmitter, a distance between the wireless power transmitter and the wireless power receiver utilizing the delta of the one or more beacons. The method includes generating, by the wireless power transmitter, a high power signal based on the distance. The method includes transmitting, by the wireless power transmitter, the high power signal to the wireless power receiver.

According to one or more embodiments, any of the methods and systems herein can be implemented as a method, a system, an apparatus, a device, and/or an environment.

These and other features of the present invention will become readily apparent upon further review of the following specification and drawings.

### BRIEF DESCRIPTION OF THE DRAWINGS

FIG. 1 is an environmental, perspective view of an embodiment of a wireless power communication system according to one or more embodiments.
FIG. 2A is a perspective view of the phased array net antenna for a microwave transmitter in a wireless power transmission system according to the present invention.
FIG. 2B is a diagrammatic view of a power transmission node in a wireless power transmission system according to the present invention.
FIG. 3A is a block diagram of the first embodiment of the wireless power transmission system according to the present invention.
FIG. 3B is a block diagram of the second embodiment of the wireless power transmission system according to the present invention.
FIG. 4 is a block diagram of an alternative first embodiment power transmitter.
FIG. 5 is a block diagram of an alternative second embodiment power transmitter.
FIG. 6 is block diagram of a controller.
FIG. 7 is block diagram of an alternative receiver in accordance with the first embodiment.
FIG. 8 is a block diagram of an alternative receiver in accordance with the second embodiment.
FIG. 9 is a block diagram of a receiver battery system.
FIG. 10 is an example battery system power line diagram.
FIG. 11 is an alternative receiver in accordance with the first embodiment.
FIG. 12 is an alternative receiver in accordance with the second embodiment.
FIG. 13 is a flow diagram of an example method for providing high power in a wireless power system according to one or more embodiments.
FIG. 14 is a flow diagram of an example method for providing high power in a wireless power system according to one or more embodiments.
FIG. 15 is a flow diagram of an example method for providing high power in a wireless power system according to one or more embodiments.
FIG. 16 is a flow diagram of an example method for providing high power in a wireless power system according to one or more embodiments.
FIG. 17 is a diagram of an example system for providing high power according to one or more embodiments.

Similar reference characters denote corresponding features consistently throughout the attached drawings.

### DETAILED DESCRIPTION

The present invention relates generally to power transmission systems and battery chargers, and particularly to a method and system for wireless power transmission by microwave transmission to power a device requiring electrical power.

The method and system for wireless power transmission by microwave transmission provides wireless charging and/or primary power to electronic/electrical devices via microwave energy. The microwave energy is focused to a location in response to receiving a beacon signal from a beacon device (e.g., a power receiver) by a power transmitter having one or more adaptively-phased microwave array emitters. Rectennas within the power receiver to be charged receive and rectify the microwave energy and use it for battery charging and/or for primary power.

According to one or more embodiments, a wireless power system is provided. The wireless power system is adapted for high power, high distance applications by providing high power transmissions using a beacon to drive a power emission, using a multiple receiver power balance, using multiple power transmitters transmitting to one or more power receivers, or using any combination thereof.

By way of example, the wireless power system can utilize the beacon to reflect how the power is delivered (e.g., from the power transmitter to the power receiver). That is, when a distance between the power transmitter and the power receiver is short (e.g., within a Rayleigh distance 2D^2/λ), a focus of the power may be very small for the power receiver that is a large. Further, because the power receiver can have rectifiers at every antenna port of an array (e.g., the rectennas), a maximum power to any antenna port is limited. In turn, the maximum power at any antenna port within a small area can be exceeded when a focus of high power transmissions is delivered to the small area. That is, the excess power can be due to a small focus area covering a few antennas and/or due to a small distance between the power transmitter and the power receiver. The excess power can be spread over power receiver ports of the power receiver. Accordingly, the wireless power system is adapted for high power, high distance applications by providing high power transmissions using a beacon to drive a power emission as described herein.

By way of example, the wireless power system can power multiple moving devices (e.g., drones or other power receivers) at a distance. In doing so, the wireless power system must send enough power to all the devices. Yet, a problem is created when a single device of the multiple moving devices moves to further distances, in that more power needs to be delivered to that single device. Accordingly, the wireless power system is adapted for high power, high distance applications by providing high power transmissions using a multiple receiver power balance as described herein.

By way of example, the wireless power system can utilize multiple power transmitters. When multiple power transmitters power a single device (or multiple devices), each power transmitter can expect a beacon from the power receiver of the single device (e.g., or multiple beacons from the multiple devices). In turn, each power transmitter can transmit power individually and/or at different times. The power from the multiple power transmitters will add up at the power receiver of the single device and over power the power receiver. Accordingly, the wireless power system is adapted for high power, high distance applications by providing high power transmissions via multiple power transmitters transmitting to one or more power receivers as described herein.

Thus, the technical effects, benefits, and advantages of the wireless power system include solving concerns with the size of the power receiver being enabled to capture the focused power at the high distances and with the growth of the beam of the focused power over the high distances.

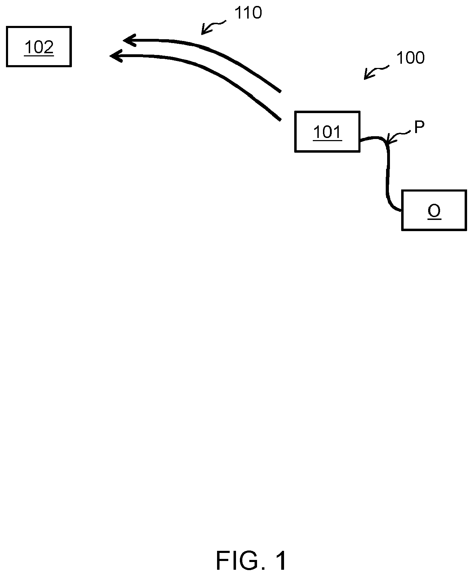

As shown in FIG. 1, the present invention includes a system 100 for communicating with electronic/electrical devices, for example a device 102 (e.g., a laptop computer, a mobile device, or a drone), or other devices, via microwave energy. In the system 100, power transmission grid 101 (or an alternative power transmission grid) can obtain operational power from the A.C. mains via power cord P being plugged into power outlet O. The microwave transmission frequency is preferably an available FCC unregulated frequency having a suitable wavelength.

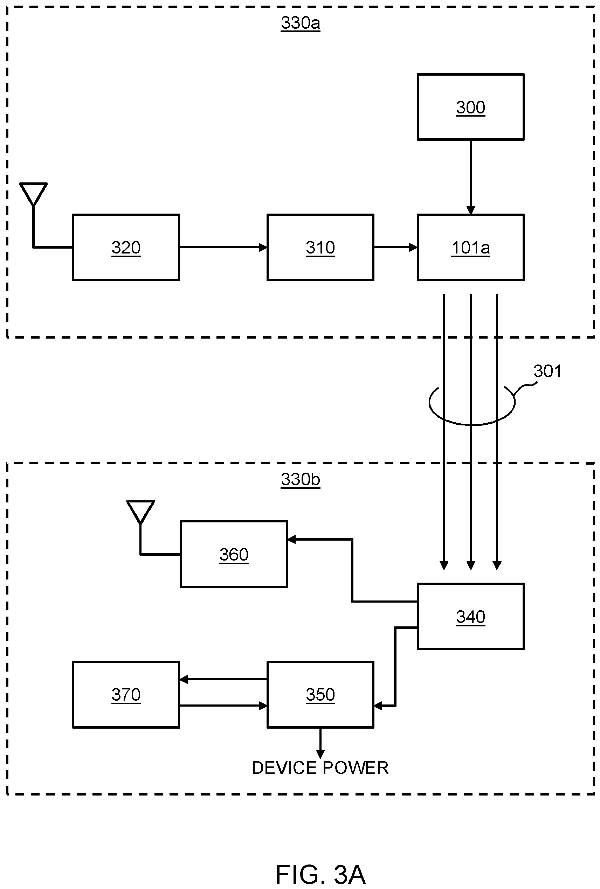

As shown in FIGS. 1-3B, the microwave energy is focused onto a device 102 by a power source 300 connected to one or more adaptively-phased microwave array emitters 204, i.e., antennae or radiators. According to one or more embodiments, the microwave energy from the adaptively-phased microwave array emitters 204 may be focused onto the device. As shown in FIGS. 1 and 3A-3B, preferably highly efficient rectennas 340 (a rectenna is a rectifying antenna that converts microwave energy directly into direct current (D.C.) electricity) within the device 102 receive the microwave energy. In an embodiment, a communications channel is opened between the wireless power source 100 and power receiver 330b in the device 102 on a frequency other than the frequency used to convey power.

The device 102 relays a received beam signal strength at the rectennas 340 over the communications channel 110 to a receiver section of communications device 320 in the power transmitter 330a of system 100 via a signal from a transmitter section of communications device 360 in the power receiver 330b. This information is used by control logic 310 of the system 100 to power up, power down, and adjust the transmitting phases of the microwave array emitter nodes 204 until a maximum microwave energy beam 301 is radiated by the array 110, as reported by the device 102.

Each emitter 204, being connected to a single source of the desired transmission frequency, can transmit a signal with a specific phase difference, which is a multiple of λ/2. The λ/2 phase increments are exemplary only, and other phase increments, for example λ/4, λ/8, λ/16, and other increments, are possible. Preferably, power is not adjusted, except that the emitter 204 can be turned off or turned on to a desired phase.

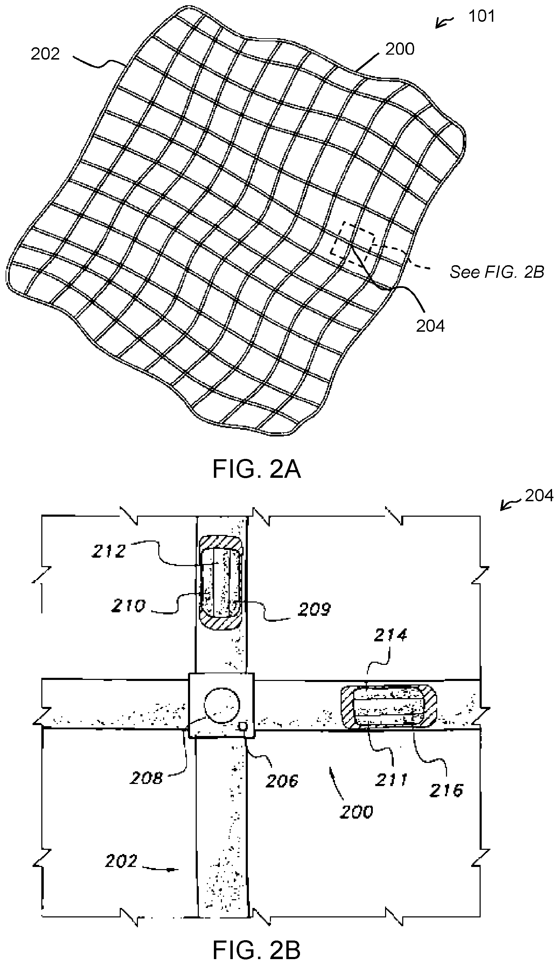

As most clearly shown in FIGS. 2A-2B, vertical and horizontal cables intersect at each array node 204. This configuration applies to array 101. Within vertical cable 202, wire 210 is a zero (0) λ phase feed line. Wire 212 is a ½ λ phase feed line, and wire 209 is a vertical control line. Similarly, within horizontal cable 200, wire 214 is a λ phase feed line. Wire 216 is a 3/2 λ phase feed line, and wire 211 is a horizontal control line. Control lines 209 and 211 can be connected to the controller 310 in order to control which phase is active on any given node 204. Single antenna control can be on a chip 206, while the actual node radiator or antenna 208 may be formed as a circular element surrounding the geometric center of the node 204. It should be understood that either a single controller or a plurality of controllers may control one or more of power transmission grids.

An exemplary algorithm of control logic 310 for system 100 might be as follows: (1) the power receiver 330 can use the communications channel 110 to declare its presence to any transmitters 330a in the vicinity; (2) the power transmitter 330a may communicate its presence on the communications channel 110 and start transmitting with only one of its antennae 208 or nodes 204; (3) the power receiver 330b may acknowledge receiving the faint signal on the communications channel 110; (4) the power transmitter 330a switches on another antenna 208 or node 204 with a default phase of zero and may ask the receiver 330b over the communications channel 110 for signal strength; (5) the power receiver 330b may send back a signal indicating that the received signal is higher, the same, or lower than before; (6) if the signal is lower than or the same as before, the controller 310 may cause the phase at node 204 to increase its phase by ½ λ and request another signal strength transmission; (7) steps 5 and 6 are repeated for all phases; (8) if no increase in signal strength is observed then that particular node 204 is switched off and another node is used in the process, repeating from step 4; (9) steps 4-6 are repeated until all emitters nodes are in use.

In another example, step (6) may include increasing the phase over a three-phase cycle that includes 0, ½ λ, and 5 λ/4 radians. In this manner, the approximate shape of the whole sinusoidal curve may be determined. Accordingly, the phase angle of the peak power may be determined. Also, since when adding up tuned antennas, the next added antenna received power may only be a small percentage of the total power received. Thus, adding the second antenna may increases the power by 4x, while adding the 101 st antenna may add 2% to the power and the 1001 st may add 0.2% to the total power received. This may make it difficult to detect the actual power gain/loss from the tested antenna. Therefore, only a few antennas may be powered up during the testing cycle, and the phases for each antenna tested may be remembered. Once the full array's phases have been determined, all the elements may be switched on to deliver power.

Alternatively, all of the antennas in the power transmitted may be re-tuned, possibly by moving their phases slightly around their current values, and detecting the impact on the received signal. If it improves in one direction, (e.g., advancing or retarding the phase), the phase may continue to be cycle/incremented until there is no improvement to either side. This will depend on the ability to detect the change in received power level for a large array, otherwise, the whole array might be required to switch off and re-establish the phases from scratch

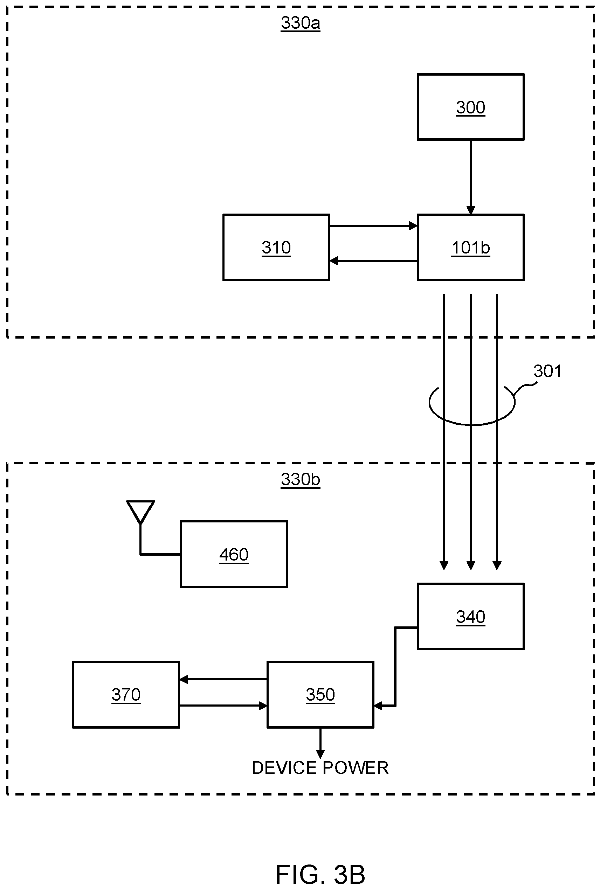

In another embodiment, as most clearly shown in FIGS. 2B and 3B, each array element or node 204 can be set to receive a calibration signal from a calibration transmitter 460 in the power receiving system 330b. Each array element or node 204 can send the received calibration signal detected at that node 204 to the control logic 310 via data line 303. Subsequently, either controller 310, controller 206, or both controllers in combination may set each array element or node 204 to the detected phase for that element as a transmitting phase in order to send an optimized power transmission 301 back to the power receiver 330b. In an embodiment, a configuration memory device may be in operable communication with the controller logic 310 in order to enable the array to transmit power to a specific location or "hotspot" without first having to communicate to the device 102. This feature is useful in sending power transmission 301 to the device 102 when the device 102 has no reserve power to establish communications channel 110.

Alternatively, another embodiment may operate as follows to utilize two-way capabilities in the receiver and every transmitter antenna, for example that in a transceiver. A controller may prepare every transceiver to receive the beacon signal from the power receiver, (i.e., device to be charged). The device to be charged then sends out a beacon signal, (e.g., calibration signal that may be the same frequency of the phased array via, for example, a wireless communication between the array and the receiver to sync up their clocks), that traverses all open paths between the device to be charged and the power transmitter. The received signal at the power transmitter is equivalent to the sum of all open paths between the receiver and transmitter's antennae that lands on each antenna in the power transmitter, with the sum of each path adding up to a specific power level and phase at every specific power transmitter antenna.

Each antenna in the transmitter array compares the incoming signal with an internal signal to detect the received phase. Once the received phase is established by all the transmitter's antennas, each antenna transmits back at the complex conjugate of the received phase with its full power.

In addition, since the above tuning of the array takes into consideration all possible paths, (e.g., there is no assumption that there is a direct open path between array and receiver or that the receiver moves in smooth and linear motion in the environment), any changes to the configuration of the environment may be equivalent to the receiver being moved or the power transmitter array's physical configuration being changed. Therefore, frequent re-tuning of the array may be required constantly, (e.g., 10 or more times per second).

Since retuning the antenna array requires shutting off the power being sent to "listen" to the receiver's beacon signal, time may be lost that could have been used to power the array. Accordingly, the array may reduce the frequency of the retuning when the power level at the receiver does not change significantly to maximize the power delivery to the receiver. When the power reception at the receiver drops, the array may increase the frequency of the updates until the receiver power stabilizes again. Specific limits on the frequency of the tuning may be set up, for example a minimum of 10 tps (tunings per second) to a maximum of 500 tps.

Alternatively, the tuning of a number (n) antennas may be performed as follows. All n antennas may be switched off. One of the n antennas is then turned on and left on as a reference for each of the other n antennas to tune. Each of the rest of the n antennas are then turned on, their optimal phase is recorded, and they are then turned off. When this sequence is performed on the nth antenna, all antennas are turned on at their respective optimal phases.

With respect to the embodiment of FIG. 1 having a moving receiver, all of the transmitter antennas may need to be re-tuned, for example by moving their phases slightly around their current values and detecting the impact on the received signal. If it improves in one direction, cycling/incrementing the phase continues until there is no improvement to either side. This may depend on the ability to detect a change in the received power level for a large array, otherwise, the whole array might be required to switch off and re-establish the phases from the beginning.

An exemplary array 101 can be a 30x30 grid net of approximately one meter per side, with each intersection of wires having a single transmission antenna 204. Preferably array grid 101 is made of flexible/soft materials. Flexibility of grid material enables a user to physically configure the microwave array emitter grid 101 in a substantially non-uniform, non-coplanar manner, i.e., spread out, but not flat, in order to minimize mirror focal points caused by, for example, flat, two dimensional arrays, and blind spots that ordinarily occur in flat, regularly disposed arrays having discrete phase differences.

The communicating mechanism described herein can operate when the transmitter and receiver are in communication with one another, and when the receiver has no power to communicate (due to the operative nature of backscattering).

The transmitter antennas may also take the form of including circuitry into a single chip and daisy chaining the chips with wires to create long strips of "phased wires" that may be configured and used in various shapes and designs. Constructing complex arrays with thousands of antennas and associated controllers through strings of "phase control" chips, the wires between the chips may serve as the data paths connecting the chips to a common controller, while at the same time, the wires may also act as the transmitting/receiving antennas themselves. Each chip may have more wires coming out of it acting as antennas. Each antenna may be given an address, (e.g., a, b, c, and other addresses), allowing the chip to control the phase of each antenna independently from the others. Additionally, the wires may be configured in all sorts of arrangements, depending on available space since the tuning of the array is irrespective of the antenna locations and arrangements.

Since the antenna chip controllers are connected through short wires, the wires may be utilized as antenna in several ways. For example, the wires themselves may be driven by oscillator and/or amplifiers, or a shield may be used around the wires, with the shield itself driven and used as an antenna, thus preventing the communication wires from shielding the signal in multi-layers arrays.

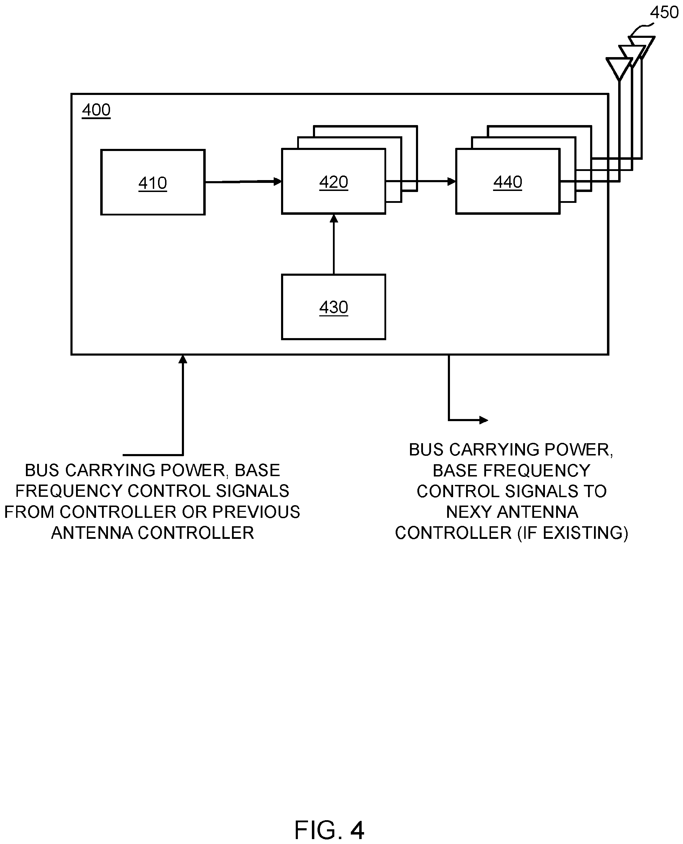

FIG. 4 is a block diagram of an embodiment of a transmitter. The transmitter may be an antenna controller 400 that includes a control logic 410, phase shifters 420 (N Count), signal generator/multiplier 430, amplifiers 440 (N Count), and (N) antennas 450. The antenna controller 400 receives power and base frequency control signals, as well as other commands and communication signals, on a common bus from a single controller that controls all antenna controllers or from a previous antenna controller 400. The power signal, for example, may be received by a power supply of the transmitter 400 (not shown), while the base frequency control signal may be received by the signal generator/multiplier 430, and the communication signals and commands may be received by the control logic 410. In the case where each previous antenna controller 400 provides the power and base frequency control signals, a bus carrying those signals may continue on to the next antenna controller 400. The control logic 410 may control the phase shifter 420 to cause it to adjust the phase of the amplifiers 440. The signal generator/multiplier receives the signal from the bus at, for example 10 MHz, and converts it up to for example 2.4, 5.8 GHz and other values for wireless transmission.

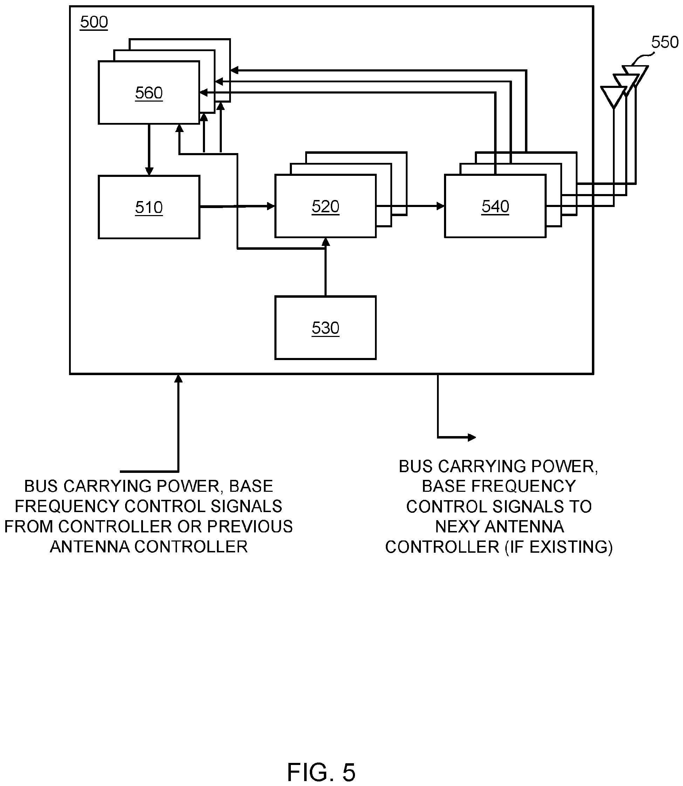

FIG 5 is a block diagram of an embodiment of a transmitter. The transmitter may be an antenna controller 500 that includes a control logic 510, phase shifters 520 (N count), signal generator/multiplier 530, transceivers 540 (N Count), (N) antennas 550, and phase comparators 560 (N Count). The transceivers 540 receive the calibration or beacon signals from the receivers and forward the signal to the phase comparators 560. The phase comparators 560 determine the phase of the received signals of their respective transceivers 540 and determine an optimal phase angle for which to transmit the power signal. This information is provided to the control logic 510, which then causes the phase shifter 520 to set the phase, (e.g., at the complex conjugate of the received beacon/calibration signal), of the transceivers and transmit the power at that set phase. The signal generator/multiplier 530 performs a function substantially similar to the signal generator/multiplier 430 of the antenna controller 400. In addition, the bus signals are similar to those in the transmitter 400, with the signals being received, for example, by the counterpart components in transmitter 500.

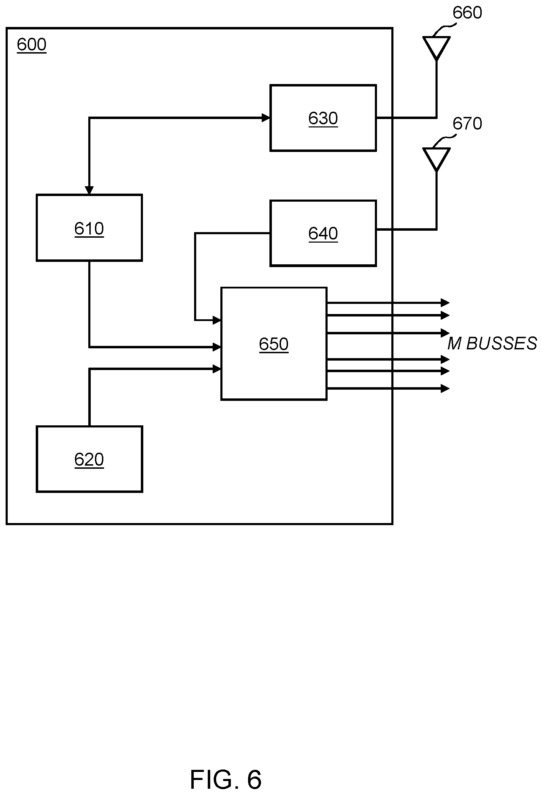

FIG. 6 is block diagram of a controller 600 for controlling, for example, the antenna controllers of FIGS. 4 and 5. The controller 600 includes a control logic 610, power source 620, communication block 630 connected to an antenna 660, base signal clock 640 connected to an antenna 670, and bus controller 650. The control logic 610 controls the bus controller 650, which transmits signals out on M buses to M number of antenna controllers, (e.g., 400 and 500). The power source 620 provides a source of power to the bus controller 650. The communication block 630 transmits and receives data from a receiver over its respective antenna 660. The base signal clock 640 transmits the base signal to other controllers and may also send/receive transmissions to the receiver for synchronization. One controller 600 may be utilized to control all transmitter antennas or several controllers 600 may be used where one controller 600 controls a group of antennas. Additionally, it should be noted that although separate communication blocks and base signal clock, having respective antennas are shown, the functionality may be incorporated into one block, (e.g., the communication block 630).

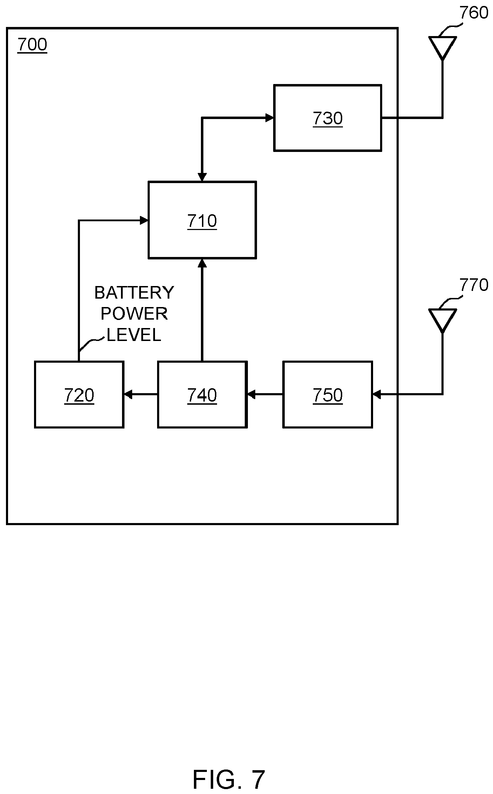

FIG. 7 is block diagram of a receiver 700. The receiver 700 can be in accordance with the embodiment of FIG. 1. The receiver 700 includes a control logic 710, battery 720, communication block 730 and associated antenna 760, power meter 740, and rectifier 750 and associated antenna 770. The control logic 710 transmits and receives a data signal on a data carrier frequency from the communication block 730. This data signal may be in the form of the power strength signal transmitted over the side channel described above. The rectifier 750 receives the power transmission signal from the power transmitter, which is fed through the power meter 740 to the battery 720 (for jamming, obstructing, crippling, or destroying). The power meter 740 measures the received power signal strength and provides the control logic 710 with this measurement. The control logic 710 also may receive the battery power level from the battery 720 itself.

The receiver 700 may be synchronized with, for example, the controller 600 by having the controller 600 transmit the base frequency signal via the antenna 670. The receiver 700 may then use this signal to synchronize a beacon signal, or calibration signal, that the receiver transmits back to the controller 600. It may also be noted that this technique may be utilized with multiple controllers as well. That is, where multiple transmission arrays are being utilized, the controllers may be synchronized with one another by utilizing a base frequency signal sent from one of the controllers.

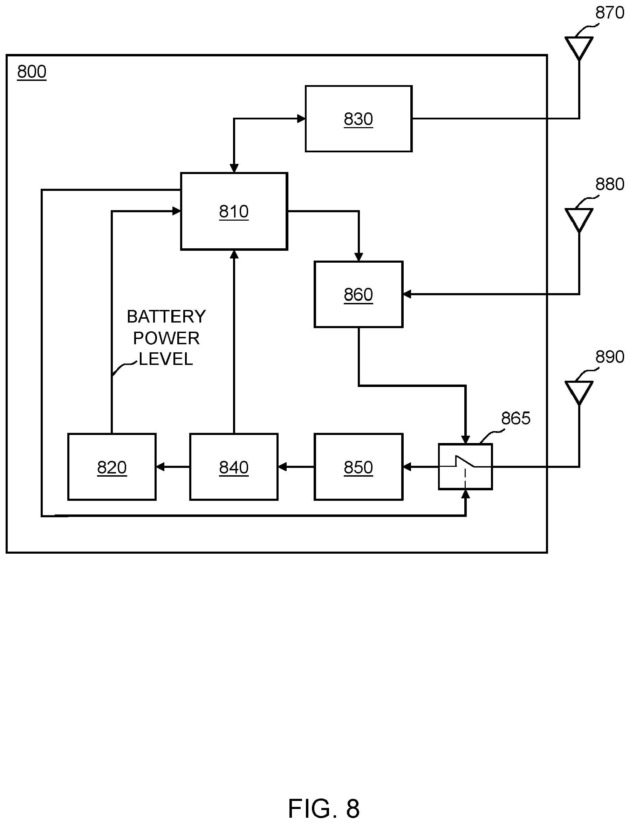

FIG. 8 is block diagram of an alternative receiver 800. The receiver 800 can be utilized in accordance with the embodiment of FIG. 1. The receiver 800 includes a control logic 810, battery 820, communication block 830 and associated antenna 870, power meter 840, rectifier 850, beacon signal generator 860 and an associated antenna 880, and switch 865 connecting the rectifier 850 or the beacon signal generator 860 to an associated antenna 890. The rectifier 850 receives the power transmission signal from the power transmitter, which is fed through the power meter 840 to the battery 820 (for jamming, obstructing, crippling, or destroying). The power meter 840 measures the received power signal strength and provides the control logic 810 with this measurement. The control logic 810 also may receive the battery power level from the battery 820 itself. The control logic 810 may also transmit/receive via the communication block 830 a data signal on a data carrier frequency, for example the base signal clock for clock synchronization. The beacon signal generator 860 transmits the beacon signal, or calibration signal using either the antenna 880 or 890. It may be noted that, although the battery 820 is shown for being charged and for providing power to the receiver 800, the receiver may also receive its power directly from the rectifier 850. This may be in addition to the rectifier 850 providing charging current to the battery 820, or in lieu of providing charging. Also, it may be noted that the use of multiple antennas is one example implementation and the structure may be reduced to one shared antenna.

Since the transmitter's antenna control circuits and the receiver power and control circuits may be built as Integrated Chips (ICs), and may share several key circuit components, the two chip functionalities may be designed as a single chip, and by choosing different packaging or configuration, the chip may function as either a transmitter or receiver. That is, the same chip with certain portions enabled or disabled may be utilized as a transmit antenna controller or a receiver controller. This may reduce the cost of building and testing two different chips, as well as save on chip fabrication costs, which may be significant.

As discussed above, the shape of the transmission grid may take on many varieties. Accordingly, the packing of the antennas could be close enough to around half a wavelength of the transmitted power signal, to several times the wavelength. Two-dimensional arrangements could be made to allow the array to be laid flat under a carpet, or draped over attic heat insulation. For example, multiple wide wires, (e.g., narrow strips of a two-dimensional array), may be employed that contain multiple transmitting antennas. These wide wires could be installed in flooring or within walls. Alternatively, the power transmission grid could be in the form of loop antennas, or any other shape.

Three dimensional arrangements might pack the largest number of antennas and can be incorporated into convenient forms, for example office ceiling tiles, doors, paintings and TVs - thus making the array invisible and non-obtrusive. Also, grid arrays may be formed in several layers stacked behind one another, allowing for a higher density antenna. In this example, the array acts similarly to a "phased volume" having a single forward beam with a minimum of a mirror beam behind it. The mirror beam may be reduced as the thickness of the phased volume increases.

That is, perfectly flat phased arrays using omni-directional antennae may create two "images" of the formed wavefronts symmetrically around the plane of the array, (e.g., when there is free space or an identical environment on opposite sides of the array). This could have undesirable consequences of reducing the power delivery, (e.g., 50% of the power going to the backplane), and thus reducing the efficiency of the transfer. Arranging the array antennae in non-planar form may reduce this symmetrical wavefront even if it has a 3-dimensional array symmetrical design, due to the fact that the antennas will have different phases on across the symmetrical sides of the array, making the signal non-symmetrical and non-"mirrored".

When the array is phase tuned for a particular receiver, every antenna in the array has a specific phase to which it transmits to create a signal that reaches that particular receiver. Two or more receivers can be configured to receive power by one or a combination of the following techniques.

In a technique, time sharing the power delivery may be utilized between the different receivers. This can be done by tuning the antennas in the array to one receiver, and then switching to the next receiver, giving each receiver an equal (or unequal) amount of time. The tuning of the array to each receiver may be done from memory or by re-tuning the array using a process similar to the second embodiment technique.

In another technique, phase modulating all the array antennae to create multiple power spots may be utilized. For each antenna, the received signal is a vector with the phase being the received angle, while the magnitude is the power level of received signal. To create the returned signal to multiple receivers, the phase of the transmission may be determined as being the angle of the sum of the received vectors. Although it may not be necessary to utilize the magnitude of the received signal and transmit from each antenna at normal transmission power, to create a biased multi-focus signal that performs better when multipath signals are considered, the peak received signal power from each receiver may be discovered, and the vector addition may be biased by scaling the vectors against a normalized scale, (e.g., peak power from each receiver may be considered of magnitude 1.0 for the peak power). The addition of the vectors may ensure that each antenna provides more power to the receiver that it delivers more power to, or, alternatively, receives more power from.

Antenna sharing is another technique. By dividing the whole array to multiple sub-arrays, each may dedicate its power to a specific receiver. This approach may be beneficial when the array is large enough to be efficient when divided.

Separate arrays may be used in unison, where the individual array units synchronize their base signal clocks using a shared over the air frequency to achieve a continuous signal from a designated "master" unit, allowing all "slave" transmitter controller units to add up their waveforms coherently. This allows the separate arrays to be distributed in the environment, giving the users flexibility in arranging multiple arrays around the building, living quarters, manufacturing plan or offices. During setup of these controllers, an installer/manager may link the different controller arrays to each other by designating a master unit along with failover sequences such that no matter how many arrays fail, the system will continue working using the available arrays. For example, the arrays may be set by synchronizing them using an atomic clock. That is, separate array units may work without synchronizing on a base frequency by using accurate atomic clocks, (e.g., greater than 1:10^10 accuracy), if the separate array units utilize a single frequency to use for power transmission. In this case, they would be in phase for fractions of a second, allowing coherency of phase/signal to be maintained.

In another power transmission technique, the transmitter may send out a regular signal at the side communication channel broadcasting its presence to all receivers. If there are other transmitters in the vicinity, it ensures to use one of the agreed upon frequencies, or avoid signal collisions by monitoring other transmitter's signals. These broadcast announcements can vary in frequency from several per minute to less than one per minute. The receiver may send out a signal announcing its presence, and the transmitters may negotiate to find which one is the most suitable for acting upon (for jamming, obstructing, crippling, or destroying). Once decided, the receiver "locks" onto a single transmitter. This may require that each transmitter is defined as a logical (single controller) device - which could be made up of multiple linked transmitters. If the controller detects that the power envelope has changed, (i.e., a receiver is not requiring the same power or responding to the action), the controller may continue to provide power transmission power and/or communication signals.

In another power transmission technique, the transmitters could be set up such that they are open to serve power to any wanting device, or they could be "paired" with the devices they should serve. Pairing avoids the problem of the neighbors' borrowing power from each other unintentionally, which could affect the efficiency from the transmitter's owner point of view. When the transmitter is confronted with multiple receivers, it may want to establish a hierarchy for prioritization, for example giving the neediest devices the power transmissions first, which could be established on one or more predefined criteria.

For example, some of the criteria may include: the device is of critical importance to its owner, (e.g., a drone as opposed to a toy); the device does not typically spend all day in the vicinity of the transmitter, (e.g., a router compared to a cell phone); or the device is found to provide an immediate threat. Such devices may be given higher priority over others. Alternatively, a user customized priority may be utilized, whereby the user decides which device should get the highest priority.

The example prioritization preference described above may be pre-installed into the transmitter system, (e.g., in the control logic), with the ability to be overruled by the installer of the array, ensuring that the system is delivering on the prioritization of the owners/users. The owner or user may also desire whether the array would be open to deliver power to any device, or may desire to register specific devices as highest priority or least priority. Additionally, the user or owner may desire to determine whether or not to maintain power transmissions to specific device even if it is moving.

In another array tuning algorithm embodiment, the transmission of power transmissions has to be stopped as the array re-tunes to a new location of the receiver. If these re-tune operations are done at a high frequency due to fast movement of the receivers or due to rapid changes in the configuration of the environment, the time needed to keep the array turned off while receiving a new beacon signal could reduce the power delivery efficiency. Accordingly, to counteract this, more than one frequency may be used by the array/receiver. While one frequency is being tuned, another frequency may continue to transmit power, then the subsequent frequency is tuned until all the frequencies have re-tuned, thus avoiding any stopped gaps in the transmission.

When designing large phased arrays, having to send the required frequency to every antenna may be difficult due to the large number of cables, (e.g., coaxial). This may be even more difficult when the number of antennas reaches over 1000. In another alternative, therefore, instead of sending a high frequency signal (>1 GHz) to all the antennas, a lower frequency signal (~10MHz) may be transmitted through to all the antennas, and every antenna would have frequency multiplication circuitry such as Phased Locked Loop (PLL) and phase shifter.

Additionally, a standard format battery, (e.g., AA, AAA, C-cell, D-cell or others), with ability to receive power and recharge itself might be desired as a replacement for a disposable or rechargeable batteries used in an electronic/electrical device. This would require the battery to have all the circuitry needed to communicate with the transmitter array, as well as have charge/energy capacitance to be used to run the device the battery powers.

The device often requires voltage or current to activate the components or battery capacitance to ensure long operation between battery swaps, that exceeds the capability of single battery. Therefore multiple batteries are often used in series or in parallel. However, with a single receiver battery, only one battery can be necessary for device operation, since the battery can deliver the required voltage and the energy capacity becomes a moot issue since the battery is able to receive copious amounts of energy to maintain operation perpetually without need for changing the batteries.

However, using a single battery in place of several batteries may not work due to the configuration of the device's battery storage area. Accordingly, additional techniques may be employed to overcome this.

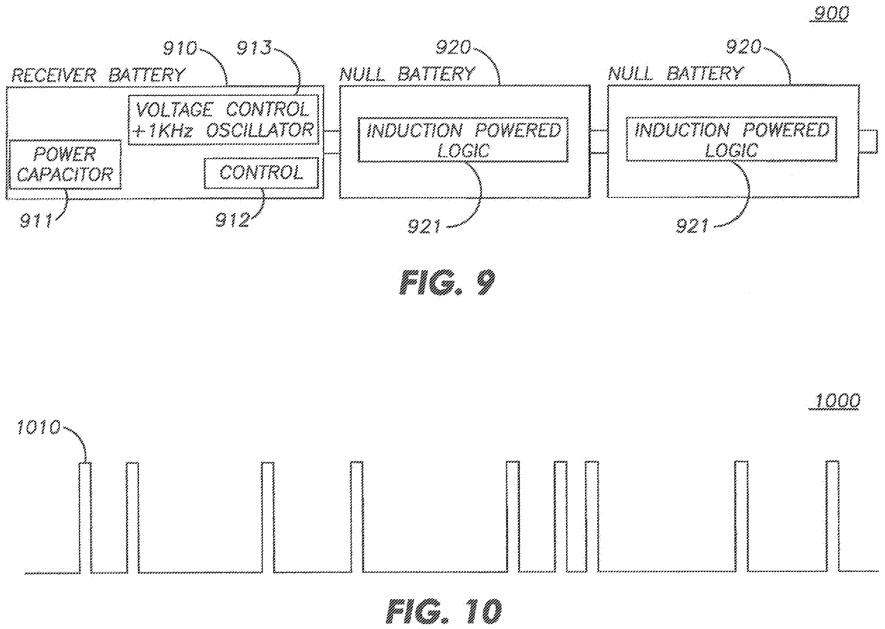

FIG. 9 is a block diagram of a receiver battery system 900. The system 900 includes at least one receiver battery 910 and may include any number of null batteries 920. For purposes of example, one receiver battery 910 is shown and two null batteries 920, however, it should be noted that any number of null batteries may be utilized. The receiver battery 910 includes a power capacitor 911, a control circuit 912, and a voltage control oscillator 913. The null battery 920 includes induction logic 921.

Accordingly, the battery system 900 may operate as follows. Only one battery with the "receiver" enabled battery, (i.e., 910) is provided. However, used regular batteries placed in series with a good running battery may have their resistance build up over time, and they could leak once their lifetime usage is exceeded, among other problems that can occur.

Alternatively, "null" batteries, (i.e., 920), may be used in conjunction with a "power selector" on the receiver battery 910. The null batteries 920 in one example are devices with exact battery dimensions but with their anodes shortened, making the voltage of the receiver battery 910 drive the device unaided. The receiver battery 910 utilizes the control circuitry or slider 912 or other selection mechanism to allow the user to select the number of batteries he/she is replacing. The receiver battery 910 then outputs the desired voltage to compensate for the null batteries 920.

In another technique, intelligent null-batteries 920 as well as an intelligent receiver battery 910 may be used. The receiver battery will initially output the voltage of one battery of the desired format as well as 1 KHz (or similar other frequency) low voltage oscillation (<0.1V oscillation for the duration of detecting the number of null batteries used), and the intelligent null-batteries 920 use the 1KHz to power themselves inductively. The null batteries now create an effect on the power-line by resistance, capacitance or other means that the receiver battery can detect. The frequency of effect of the intelligent null-batteries 920 is done by onboard quasi-random generators, (e.g., logic 921), that have the characteristic of being statistically additive. It can therefore be determined the count of the quasi-random generators on the line. One embodiment of this would be the use of a 32-bit linear feedback shift register running at a known interval, such that the shifted bit is used to trigger the effect "blips" on the power line. The seed number of the feedback shift registers on power up should be different on all the null batteries 920 so they do not work in unison.

FIG. 10 is an example battery system power line diagram 1000, including "blips" 1010. The receiver battery 910 counts the blips 1010 on the power line and determines the number of intelligent null-batteries 920. The blips 1010 could be high frequency pulses or capacitance modifiers. Blips that are not masked out by most electrical/electronic devices may be chosen. This process is performed for a short period of time, for example, less than 1 millisecond. After that, the receiver battery 910 does not require voltage detection until a next power-up which could be in a different device with different power needs. The 1KHz "power" frequency created by the receiver battery 910 stops and the null batteries 920 become dormant and become transparent to the device being powered.

Referring again to FIG. 10, random blips 1010 are generated by each of the two null batteries 920 over the power system line of system 900. The blips 1010 are used to determine the number of random blip generators by the receiver battery 910. By counting the blips over time, and dividing by the expected number from a single null battery 920, it can be determined the number of null batteries 920 installed in series. In a parallel battery installation system, however, one receiver battery 910 may be required for each parallel power line.

When a device is receiving power at high frequencies above 500MHz, its location may become a hotspot of (incoming) radiation. So when the device is on a person, the level of radiation may exceed the FCC regulation or exceed acceptable radiation levels set by medical/industrial authorities. To avoid any over-radiation issue, the device may integrate motion detection mechanisms such as accelerometers or equivalent mechanisms. Once the device detects that it is in motion, it may be assumed that it is being manhandled, and would trigger a signal to the array either to stop transmitting power to it, or to lower the received power to an acceptable fraction of the power. In cases where the device is used in a moving environment like a car, train or plane, the power might only be transmitted intermittently or at a reduced level unless the device is close to losing all available power.

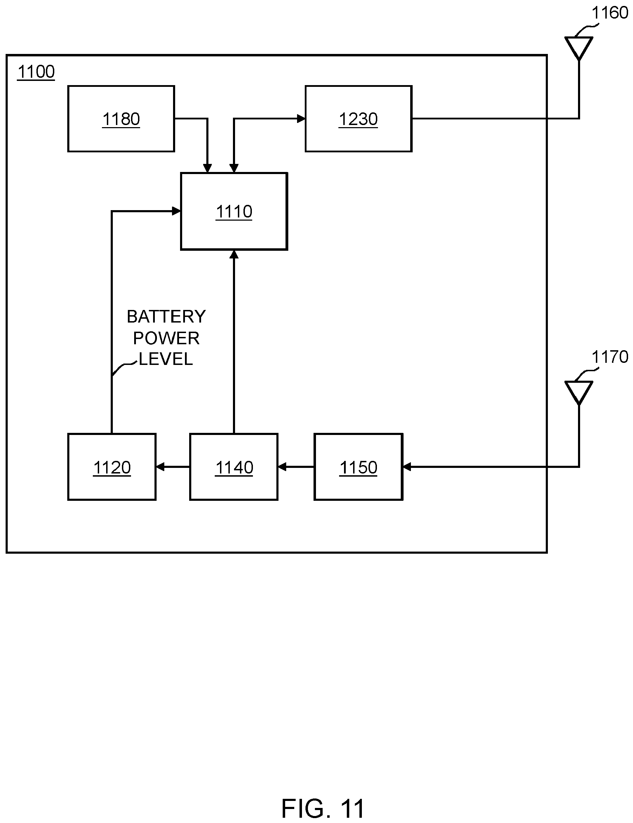

FIG. 11 is an alternative receiver 1110 in accordance with the first embodiment that includes motion detection as described above. The receiver 1100 includes a control logic 1110, battery 1120, communication block 1130 and associated antenna 1160, power meter 1140, rectifier 1150 and associated antenna 1170, and a motion sensor 1180. With the exception of the motion sensor 1180, the rest of the components operate functionally similar to the respective components of receiver 700. The motion sensor 1180 detects motion as described above and signals the control logic 1110 to act in accordance with the technique described above.

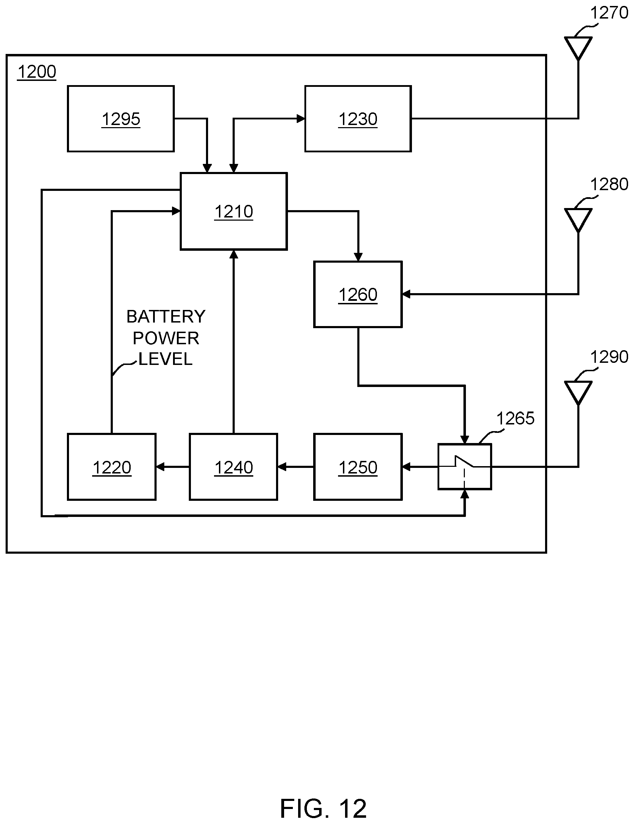

FIG. 12 is an alternative receiver 1200 in accordance with the second embodiment that includes motion detection as described above. Receiver 1200 includes a control logic 1210, battery 1220, communication block 1230 and associated antenna 1270, power meter 1240, rectifier 1250, beacon signal generator 1260 and an associated antenna 1280, and switch 1265 connecting the rectifier 1250 or the beacon signal generator 1260 to an associated antenna 1290. With the exception of the motion sensor 1295, the rest of the components operate functionally similar to the respective components of receiver 800. The motion sensor 1295 detects motion as described above and signals the control logic 1210 to act in accordance with the technique described above.

A device designed to receive power at frequencies used by WiFi communication or Bluetooth and the like such as a cell phone or media player might already have antennas capable of receiving power at the power transmission frequencies. Accordingly, instead of having additional antennas to receive the power, the same communication antennas used for the WiFi communication and the like may be used to receive power, by adding the required circuitry to the communication hardware, (e.g., adding rectification, control logic, etc.).

Some example uses of the wireless power transmission system may include supermarket and consumer retail outlets provide pricing tags on the shelves of the merchandise. Managing the price number on these tags can be an expensive and time consuming effort. Also, special deals and promotions mean that the tags would be changed daily.

With today's electronic ink signage, it is possible to have each tag made of a small electronic device that displays the prices/promotions quite effectively, and electronic ink consumes no power while displaying a static image. However, power is required to receive the new data to display and it is also required to change the electronic ink display. Having wires reaching every tag is not a feasible solution nor is having batteries in each tag. Since they would require charging or replacement regularly. By utilizing wireless power transmission, thousands of tags can be maintained operational from wireless power transmitter arrays placed in the ceilings or shelves; powering the tags on regular basis, as well as when a tag is moved. Once the tags arrive at the desired destination, the tags may be activated with initial power either wired or wireless.

In another example, manufacturing plants utilize a large number of sensors and controllers to maintain synchronization of production, overall productivity and quality of manufactured goods. Despite the use of wireless communication, it is still required to run power carrying wires to every device, which makes the devices dependent on one more components that are prone to failure, and the devices cannot be hermetically sealed before installation for use in highly combustible environments such as oil refineries, since the devices need to have holes to bring the power wires into the device. Accordingly, wireless power may be provided to these devices by incorporating one of the wireless power receivers described above.

The wireless power system may also be utilized for motion detection. When the power transmission system is active, small disturbances in the environment can change the efficiency of the transfer, even when the change is not in the line of sight of the transmission. Since this system leverages the multiple paths (multipath) in the environment, it can be used as a motion detector. By measuring the power received from an array that is localized or distributed in the environment, any changes to the power level received will be an indication of changes to the electromagnetic configuration of the environment. It may be noted that in such uses, the power transfer level can be very small, since wires can power the receiver, but is acting only as means of tuning the array. Once a change in the environment's configuration is detected, the security system/alarms may be notified of the change.

In another example, individual drink and food containers that regulate the temperature of their contents need to have a constant power source. If these containers are highly mobile, it becomes difficult to maintain the power source availability. Wireless power can be used to maintain a power source availability and hence the temperature of the containers can be maintained at the desired temperature. The containers can also use the available power to report the content's temperature, level of fluid or weight of contents. An example of this is when cold/hot drinks are served on hot days, or when drinking them cold/hot is the best way to drink them, with this capability, the drinker does not have to finish their drink before it reaches the ambient temperature, but could enjoy their drinks on a longer time period. Also, when the drinks are getting low, a host can be wirelessly notified through a signal receiver and can top up the drinks in time before they run out.

In another example, when you can monitor the power usage of the devices using power receivers, it is possible to detect failed devices prior to failure. For example fire alarms may be considered as having failed if they are not consuming the nominal power they use, or when power consumption of a device changes drastically, which usually occurs when a device is about to fail.

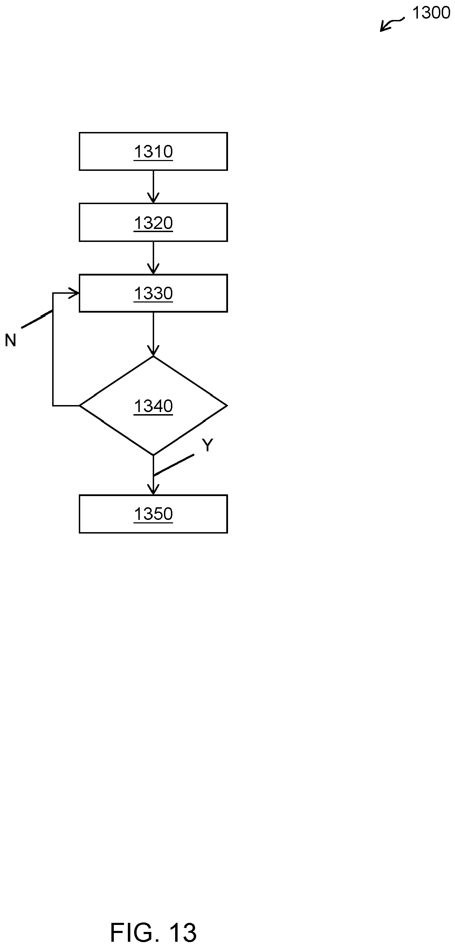

Turning to FIG. 13, a flow diagram of an example method 1300 is provided according to one or more embodiments. The example method 1300 is for providing high power in a wireless power system. The wireless power system can include a power receiver (e.g., a device to be charged) and a power transmitter. The example method 1300 begins at block 1310, where multiple beacon signals (e.g., a plurality of beacon signals) are transmitted from each receiver antenna, either in sequence or by emitting different orthogonal codes from each antenna. The multiple beacon signals can be transmitted from the power receiver to the power transmitter.

At block 1320, the wireless power system determines the phase set across the transmitter's antennas and thus the distance can be determined. The phase set can be considered a current phase set. According to one or more embodiments, the wireless power system determines a location between the power transmitter and the power receiver. By way of example, the power transmitter determines the total phase set and thus the location from the power receiver based upon the multiple beacon signals.

At block 1330, the wireless power system sends a power signal. The power transmitter, on behalf of the wireless power system, can send the power signal based upon the phase set. This power signal can be considered a first or initial power signal.

At determination diamond 1340, the wireless power system determines whether the power receiver has moved (e.g., determines a movement of the device to be charged). According to one or more embodiments, the power transmitter compares a previously determined/stored phase set with the current phase set of block 1330. As shown by the N arrow, if the power receiver has not moved (e.g., the current phase set is approximately equal to the previously determined/stored phase set), then the example method 1300 returns to block 1330 and the power transmitter continues to send the power signal based upon the determined phase set. As shown by the Y arrow, if the power receiver has moved (e.g., the current location is not equal to the previously determined/stored phase set), then the example method 1300 proceeds to block 1350.

At block 1350, the wireless power system transmits a power signal. The This power signal can be considered a second or subsequent power signal. The second or subsequent power signal is different than the first or initial power signal. According to one or more embodiments, the power transmitter transmits the second or subsequent power signal to the power receiver based upon the current location (e.g., which is different from the previously determined/stored location). Further, the power transmitter raises or lowers a power of the first or initial power signal to match the second or subsequent initial power signal based upon a movement of the power receiver.

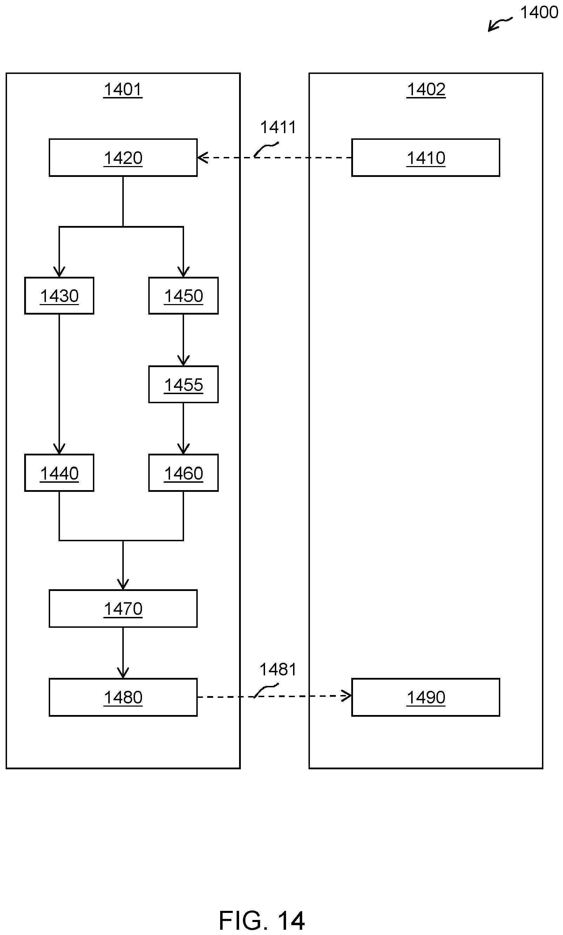

Turning to FIG. 14. a method 1400 for wireless power transmission is depicted according to one or more embodiments. The method 1400 is an example of operations using a beacon to drive a power emission in a wireless power system. The method 1400 operates across a power transmitter 1401 (e.g., a wireless power transmitter) and a power receiver 1402 (e.g., device to be charged) of the wireless power system.

The example method 1400 begins at block 1410, where the wireless power system transmits one or more beacons 1411. According to one or more embodiments, the power receiver 1402 includes an array of antennas, and the power receiver 1402 transmits the one or more beacons 1411 from different antenna of the array (e.g., each beacon of the one or more beacons 1411 corresponds to a port of the power receiver 1402).

At block 1420, the wireless power system receives one or more beacons 1411. According to one or more embodiments, the power transmitter 1401 receives the one or more beacons 1411.

At block 1430, the power transmitter 1401 adds up phases for each port of the power receiver 1402. The power transmitter 1401 adds up phases for each port independently.

At block 1440, the power transmitter 1401 generates resulting beacon phases for the high power transmission. The resulting beacon phases target all antennas of the array of the power receiver 1402 equally. Accordingly, the resulting beacon phases reduces a specific focus of the high power transmission so as not to exceed the power on any particular port of the power receiver 1402.

At block 1450, the power transmitter 1401 determines a delta of the one or more beacons 1411 from the power receiver 1402. For example, the power transmitter 1401 can determine if the beacons 1411 from the same power receiver 1402 are different enough that the power transmitter 1401 can resolve the differences.

At block 1455, the power transmitter 1401 utilizes the delta to determine whether the power receiver 1402 is close (e.g., to determine a relative location between the power receiver 1402 and the power transmitter 1401).

At block 1460, the power transmitter 1401 changes a power for a high power transmission based on the relative location of the power receiver 1402 to the power transmitter. For example, the power transmitter 1401 lowers the power for the high power transmission when the power receiver 1402 is close and raise the power for the high power transmission when the power receiver 1402 is far.

At block 1470, the power transmitter 1401 generates a high power transmission according to the resulting beacon phases of block 1440 and/or to the power for the high power transmission of block 1460.

At block 1480, the power transmitter 1401 transmits a power signal 1481 to the power receiver 1402. The power signal 1481 is the high power transmission with a reduced or specific focus that does not exceed the power on any particular port of the power receiver 1402.

At block 1490, the power receiver 1402 receives the power signal 1481 from the power transmitter 1401.

Accordingly, the wireless power system is adapted for high power, high distance applications by providing high power transmissions using the one or more beacons 1411 to drive the reduced or specific focus and/or the power of the power signal 1481 (e.g., the high power transmission).

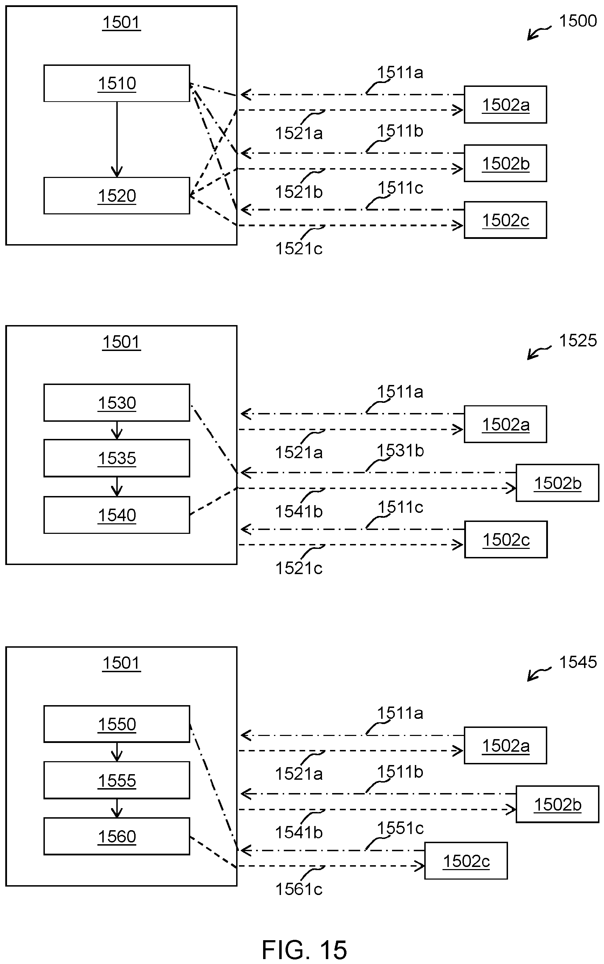

Turning to FIG. 15. a method 1500 for wireless power transmission is depicted according to one or more embodiments. The method 1500 is an example of multiple receiver power balance operations in a wireless power system according to one or more embodiments. The method 1500 operates across a power transmitter (e.g., a wireless power transmitter) and at least one power receiver 1502 (e.g., device to be charged) of the wireless power system. The at least one power receiver 1502 is represented by a first power receiver 1502a, a second power receiver 1502b, and a third power receiver 1502c,

The example method 1500 begins when the wireless power system transmits one or more beacons 1511. According to one or more embodiments, the first power receiver 1502a, the second power receiver 1502b, and the third power receiver 1502c respectively transmit beacons 1511a, 1511b, and 1511c.

At block 1510, the wireless power system receives one or more beacons 1511. According to one or more embodiments, the power transmitter 1501 receives the one or more beacons 1511a, 1511b, and 1511c.

At block 1520, the wireless power system transmits power to multiple moving devices (e.g., drones) at a distance. For example, the power transmitter 1501 transmits a power 1521a, a power 1521b, and a power 1521c to the first power receiver 1502a, the second power receiver 1502b, and the third power receiver 1502c, respectively.

Turning to a method 1525, as shown in FIG. 15, the first power receiver 1502a and the third power receiver 1502c remain stationary, as the second power receiver 1502b moves. More particularly, the second power receiver 1502b can move to a further distance away from the power transmitter 1501. Accordingly, the second power receiver 1502b transmits a beacon 1531b.

At block 1530, the power transmitter 1501 receives the beacon 1531b.

At block 1535, the wireless power system determines whether one of the power receivers 1502a, 1502b, and 1502c has moved (e.g., determines a movement of the device to be charged). According to one or more embodiments, the power transmitter 1501 can derive distance differences between the beacons 1511b and 1531b. If the power receiver has not moved (e.g., there are no distance differences), then the method 1525 returns to block 1520 of the method 1500 and the power transmitter continues to send the power signal 1521b. If the power receiver 1502b has moved (e.g., the beacon 1531b indicates a greater distance than beacon 1511b), then the example method 1500 proceeds to block 1540 because more power is needed to be delivered to that power receiver 1502b.

At block 1540, the wireless power system transmits a power 1541b. The power transmitter 1501, on behalf of the wireless power system, can send the power 1541b based upon the distance of beacon 1531b (e.g., the power transmitter 1501 power is based upon a movement of the power receiver 1502b). The power 1541b can be greater than the power 1521b.

Turning to a method 1545, as shown in FIG. 15, the first power receiver 1502a and the second power receiver 1502b remain stationary, as the third power receiver 1502c moves. More particularly, the third power receiver 1502c can move to a closer distance towards the power transmitter 1501. Accordingly, the third power receiver 1502c transmits a beacon 1551c.

At block 1550, the power transmitter 1501 receives the beacon 1551c.

At block 1555, the wireless power system determines whether one of the power receivers 1502a, 1502b, and 1502c has moved (e.g., determines a movement of the device to be charged). According to one or more embodiments, the power transmitter 1501 can derive distance differences between the beacons 1511c and 1551c. If the power receiver has not moved (e.g., there are no distance differences), then the method 1545 returns to block 1520 of the method 1500 and the power transmitter continues to send the power signal 1521c. If the power receiver 1502c has moved (e.g., the beacon 1551c indicates a greater distance than beacon 1511c), then the example method 1500 proceeds to block 1560 because less power is need to be delivered to that power receiver 1502c.

At block 1560, the wireless power system transmits a power 1561c. The power transmitter 1501, on behalf of the wireless power system, can send the power 1561c based upon the distance of beacon 1551c (e.g., the power transmitter 1501 power is based upon a movement of the power receiver 1502c). The power 1561c can be less than the power 1521c.

According to one or more embodiments, any power 1521/1541/1561 can be delivered in time division fashion. According to one or more embodiments, more power can be delivered to one device than other devices.

According to one or more embodiments, any device can be given a distinct duration (e.g., a first duration), which can be a longer power duration (e.g., taking time from other devices or excess time available can be diverted to a needy device). For example, the power transmitter 1501 can utilize time from other receivers to divert power for power 1561c to the power receiver 1502c. For example, the power transmitter 1501 can utilize excess time provide the power 1561c to the power receiver 1502c. Further, the power transmitter 1501 utilizes excess time to divert the power 1561c to the power receiver 1502c.

Note that power can be lowered to close devices, as high power (even for short durations) can damage rectifiers of the power receiver. Accordingly, the wireless power system is adapted for high power, high distance applications by providing third power receiver 1502c using the one or more beacons 1511/1531/1551 to determining a power of the third power receiver 1502c.

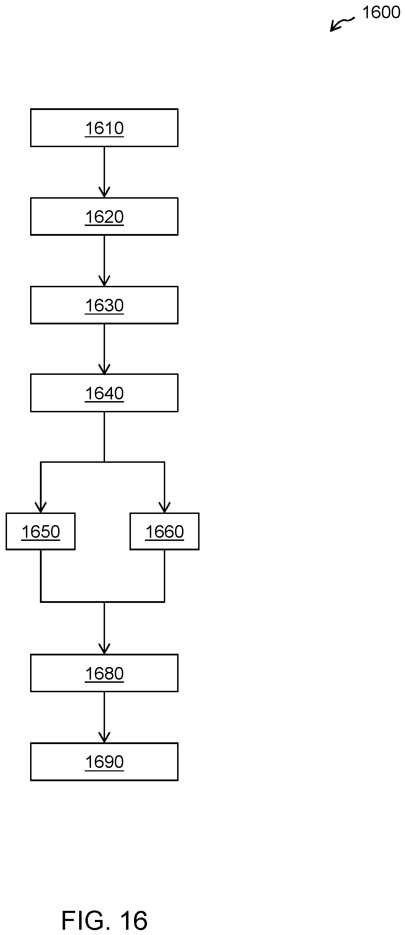

Turning to FIG. 16. a method 1600 for wireless power transmission is depicted according to one or more embodiments. The method 1600 is an operational example of multiple power transmitters transmitting to one or more power receivers in a wireless power system according to one or more embodiments. The method 1600 operates across the multiple power transmitters and one or more power receivers of the wireless power system.

The example method 1600 begins at block 1610, where the wireless power system powers a single device (or multiple devices). According to one or more embodiments, the multiple power transmitters power one or more power receivers.

At block 1615, the wireless power system transmits one or more beacons. According to one or more embodiments, the one or more power receivers respectively transmit one or more beacons (e.g., each transmitter, therefore, can expect the beacon from the power receivers).

At block 1620, the wireless power system receives the one or more beacons. According to one or more embodiments, the multiple power transmitters receive the one or more beacons.

At block 1630, the multiple power transmitters share information. According to one or more embodiments, the multiple power transmitters share the information via an over-the-air baseband frequency. The over-the-air baseband frequency is utilized for communication, coordination, and synchronization.

At block 1640, the multiple power transmitters synchronize a power transfer frequency. Next, the method 1600 proceeds to one or both of blocks 1650 and 1660.

At block 1650, the multiple power transmitters determines a power to emit to the power receiver from the multiple power transmitters. The multiple power transmitters determine whether to emit the power at the same time. Note that higher power at the power receiver can be achieved if the power to the power receiver from the multiple power transmitters are emitted at the same time. Since some of the incoming signals to the power receiver may cancel each other, frequencies of the different transmitters may be slightly offset from each other.

At block 1660, the multiple power transmitters determines whether power signals from different transmitters are coherent (with each other) at the power receiver. Note that higher power at the power receiver can be achieved if power signals from different transmitters are coherent (with each other) at the power receiver. Accordingly, the wireless power system realized the higher power by having the multiple power transmitters in phase with each other. Transmitter frequencies can be fully synchronized, so as not to result in highest power delivery.

At block 1680, the wireless power system transmits a power. That is, the multiple power transmitters, on behalf of the wireless power system, can send the power to the power receiver as synchronized. Note that each transmitter can, in turn, transmit power individually and at different times.

At block 1690, the wireless power system adds up at the power receiver.

Accordingly, the wireless power system is adapted for high power, high distance applications by providing high power transmissions utilize multiple power transmitters.

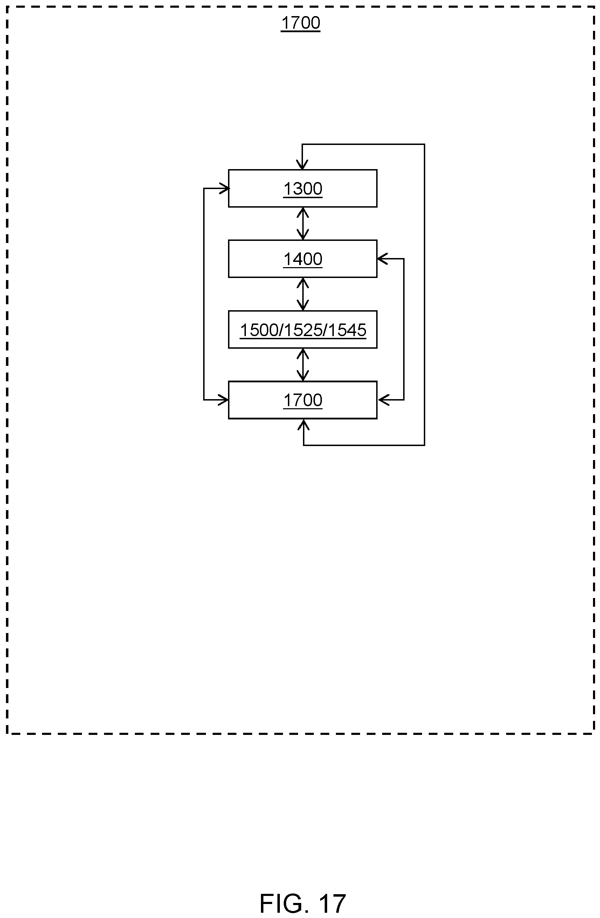

Turning to FIG. 17. a wireless power system 1700 is shown according to one or more embodiments. The wireless power system 1700 shows the integration of the methods 1300, 1400, 1500/1525/1545, and 1600, for example, so that any combination of the operations therein can be performed across a power transmitter and a power receiver of the wireless power system 1700. Thus, the wireless power system 1700 is adapted for high power, high distance applications by providing high power transmissions (e.g., the method 1300) using a beacon to drive a power emission (e.g., the method 1400), using a multiple receiver power balance (e.g., the method 1500/1525/1545), using multiple power transmitters transmitting to one or more power receivers (e.g., the method 1600), or using any combination thereof. The technical effects, benefits, and advantages of wireless power system 1700 include solving concerns with the size of the power receiver being enabled to capture the focused power at the high distances and with the growth of the beam of the focused power over the high distances.

According to one or more embodiments, a method for providing high power in a wireless power is provided. The method includes receiving, by a wireless power transmitter, a plurality of beacon signals from a device to be charged. The method includes transmitting, by the wireless power transmitter, a power signal to the device to be charged based upon the plurality of beacon signals. The method includes raising or lowering the power of the power signal based upon a movement of the device to be charged. According to one or more embodiments, an apparatus, device, system, or environment can implement the method.

It is to be understood that the present invention is not limited to the embodiments described above, but encompasses any and all embodiments within the scope of the following claims. For example, although a frequency of 5.8 GHz has been described above, any frequency over 100 MHz may be utilized for the power transmission frequency.

It should also be noted that any type of rechargeable batteries may be utilized to receive the charge from the power transmission grid, including standard size rechargeable batteries or custom rechargeable batteries for use in specific electronic devices, (i.e., cell phones, PDAs, and the like). These rechargeable batteries may be utilized to replace the currently existing batteries and may include the electronics of the power receiver that will allow them to receive the power transmission signal and convert it to recharge the batteries.

According to one or more embodiments, a method and apparatus is provided. The method and apparatus is for encrypting a beacon in a wireless power system includes a wireless power transmitter receiving an encrypted beacon signal from a device to be charged. The wireless power transmitter authenticates the device to be charged based upon the encrypted beacon, and transmits a power signal to the device to be charged based upon the authentication.

It is to be understood that the present invention is not limited to the embodiments described above, but encompasses any and all embodiments within the scope of the following claims.

## Claims

1. A method comprising:
receiving, by a wireless power transmitter of a wireless power system, one or more beacon signals transmitted from a wireless power receiver of the wireless power system;
adding, by the wireless power transmitter, phases for each port of the wireless power receiver based upon the one or more beacon signals;
generating, by the wireless power transmitter, a high power signal based on adding of the phases; and
transmitting, by the wireless power transmitter, the high power signal to the wireless power receiver.

2. The method of claim 1, wherein the high power signal based on the addition of the phases targets all antennas of an array of the wireless power receiver equally.

3. The method of claim 1, wherein the high power signal being based on adding of the phases reduces a specific focus of the high power signal to below a power on any port of the wireless power receiver.

4. The method of claim 1, wherein the power transmitter adds the phases for each port independently.

5. The method of claim 1, wherein a device to be charged comprises the wireless power receiver.

6. The method of claim 1, wherein the wireless power transmitter raises a power of the high power signal based on the addition of the phases.

7. The method of claim 1, wherein the wireless power transmitter lowers a power of the high power signal based on the addition of the phases.

8. The method of claim 1, wherein the wireless power receiver includes an array of antennas that transmits the one or more beacons to drive a power of the high power signal in the wireless power system.

9. The method of claim 1, wherein the one or more beacons are received from different antenna of an array of antennas of the wireless power receiver.

10. The method of claim 1, wherein the wireless power transmitter determines the relative location between the wireless power transmitter and the wireless power receiver based upon the one or more beacon signals.

11. The method of claim 1, wherein the wireless power transmitter determines a delta of the one or more beacons to determine whether the one or more beacons are different enough for resolution.

12. The method of claim 1, wherein the wireless power transmitter utilizes a delta of the one or more beacons to determine the relative location between the wireless power receiver and the wireless power transmitter.

13. The method of claim 1, wherein the wireless power transmitter changes a power for the high power signal based on the relative location of between the wireless power receiver and the wireless power transmitter.

14. A method comprising:
receiving, by a wireless power transmitter of a wireless power system, one or more beacon signals transmitted from a wireless power receiver of the wireless power system;
determining, by the wireless power transmitter, a delta of the one or more beacons;
determining, by the wireless power transmitter, a relative location between the wireless power transmitter and the wireless power receiver utilizing the delta of the one or more beacons;
generating, by the wireless power transmitter, a high power signal based on the relative location; and
transmitting, by the wireless power transmitter, the high power signal to the wireless power receiver.

15. The method of claim 14, wherein the wireless power transmitter determines the delta of the one or more beacons to determine whether the one or more beacons are different enough for resolution.

16. The method of claim 14, wherein the wireless power transmitter raises a power of the high power signal based on the relative location of between the wireless power receiver and the wireless power transmitter.

17. The method of claim 14, wherein the wireless power transmitter lowers a power of the high power signal based on the relative location of between the wireless power receiver and the wireless power transmitter.

18. The method of claim 14, wherein the wireless power receiver includes an array of antennas that transmits the one or more beacons to drive a power of the high power signal in the wireless power system.

19. The method of claim 14, wherein the one or more beacons are received from different antenna of an array of antennas of the wireless power receiver.

20. The method of claim 14, wherein a device to be charged comprises the wireless power receiver.
